# EUROPEAN PATENT SPECIFICATION

(11) **EP 3 967 992 B1**
(45) Date of publication and mention of the grant of the patent: **03.01.2024**
(21) Application number: 21176592.0
(22) Date of filing: 28.05.2021
(51) Int. Cl.: G01G 19/414

(54) **CONTROLLER FOR WEIGHING APPARATUS**
STEUERUNG FÜR WÄGEVORRICHTUNG
ORGANE DE COMMANDE POUR APPAREIL DE PESÉE

(30) Priority: 14.09.2020 EP 20195938
(43) Date of publication of application: 16.03.2022
(73) Proprietor: Illinois Tool Works, Inc., Glenview, Illinois 60025 (US)
(72) Inventor: CARTWRIGHT, Kevin, Smethwick, B66 2LP (GB); BRRANG, Bal, Smethwick, B66 2LP (GB); MATHERS, Ray, Smethwick, B66 2LP (GB)
(74) Representative: HGF

(56) References cited:
- WO-A2-2019/147369
- US-B2- 8 915 429

## Description

Embodiments of the present invention relate to a weighing apparatus, a controller for a weighing apparatus, and a method for controlling a weighing apparatus.

### BACKGROUND

In a retail setting, goods are often sold by weight. A user-operated weighing apparatus comprising a scale is provided in store for weighing the goods. The price per weight may vary between different types of goods to be weighed at the weighing apparatus. At the weighing apparatus, the user may select the type of goods to be weighed at a touch screen or keypad associated with the weighing apparatus. The weighing apparatus may then print a label for the goods to identify the type, weight and price of the item for the user to scan at checkout.

Such a method necessitates user contact with a portion of the weighing apparatus such as a touch screen to make a selection. However, as the weighing apparatus is used by a number of customers it may be desired to reduce this user contact, such as to improve hygiene and reduce wear on the apparatus.

WO 2019/147369A2 discloses a system and method for generating digital product labels. Product identification data of a product is received via one of a user interface and a network interface. Value per weight data is obtained from a product data store via the network interface. A weight value is determined, and a digital product label is generated.

US 8915429B2 discloses prompting a customer to scan a barcode identifying a produce weighing scale, and after receiving the barcode data, prompting the customer to place produce items onto a weighing platform. Once the customer confirms the weight and the price, the weight, price and scale ID are sent to the cloud.

It is an aim of the present invention to mitigate one or more of the problems of the prior art.

### BRIEF SUMMARY OF THE DISCLOSURE

In accordance with the present invention there is provided a controller for a weighing apparatus, a weighing apparatus, and a method for controlling a weighing apparatus.

According to aspects of the present invention there is provided apparatus and methods as set forth in the appended claims.

According to a first aspect of the present invention there is provided a controller for a weighing apparatus, comprising: an output configured to communicate apparatus identification data to a mobile device; an input configured to receive weight data from a scale associated with the weighing apparatus, the weight data being indicative of a weight of goods on the scale, and to receive item identification information associated with the goods from the mobile device; and one or more processors. The one or more processors are configured to determine label data in dependence on the weight data and the item identification information.

The one or more processors may be configured to output a control signal to control a display device associated with the weighing apparatus to display a machine readable label in dependence on the determined label data. Alternatively, or additionally, the one or more processors may be configured to output a control signal to control a printing device associated with the weighing apparatus to print a machine readable label in dependence on the determined label data.

According to a further aspect of the present invention, there is provided a controller for a weighing apparatus, comprising: an output configured to communicate apparatus identification data to a mobile device; an input configured to receive weight data from a scale associated with the weighing apparatus, the weight data being indicative of a weight of goods on the scale, and to receive item identification information associated with the goods from the mobile device; and one or more processors configured to: determine label data in dependence on the weight data and the item identification information; and output a control signal to control a printing device associated with the weighing apparatus to print a machine readable label in dependence on the determined label data. Advantageously, direct user contact with the weighing apparatus is reduced.

Optionally, the output is configured to communicate the apparatus identification data to the mobile device in response to the mobile device being within a predetermined distance of the weighing apparatus. That is, in response to the mobile device approaching or being proximal to the weighing apparatus. The predetermined distance may be the maximum distance over which the apparatus identification data can be communicated. For example, the predetermined distance may be a range of an open short-range wireless communication protocol such as Bluetooth, NFC, ZigBee or the like; or the predetermined distance may be sufficiently close for a user to scan a display of the weighing apparatus with the mobile device.

The output may be a wireless output configured to communicate the apparatus identification data to the mobile device using a short range wireless communications protocol. The output may be configured to communicate the apparatus identification data to the mobile device in response to the mobile device being within range of the short range wireless communications protocol. Advantageously, user interaction with the weighing apparatus is reduced and system efficiency is improved, as the apparatus identification data may be communicated automatically as the mobile device approaches the weighing apparatus.

According to the invention the apparatus identification data is indicative of an URL associated with the weighing apparatus. The URL may be represented as a machine readable graphic, and the output may be configured to communicate the machine readable graphic to a display device associated with the weighing apparatus for scanning by the mobile device. Advantageously, no dedicated software needs to be installed on the mobile device, a generic web browser is sufficient to facilitate interaction with the weighing apparatus.

The input may be configured to receive the item identification information from an optical code reading device configured to read a machine readable graphic displayed on a display device associated with the mobile device. Advantageously, the item identification information may be selected on an interface of the mobile device and communicated to the weighing apparatus using only the display of the mobile device and an optical code reader.

According to another aspect there is provided a weighing apparatus, comprising: a scale configured to determine a weight of goods placed thereon and output weight data indicative of the weight of the goods; a display device configured to display machine readable apparatus identification data associated with the weighing apparatus; an optical code reading device configured to read machine readable item identification information associated with the goods from a display associated with a mobile device; and the controller as described above.

According to another aspect there is provided a computer-implemented method of controlling a weighing apparatus, comprising: communicating apparatus identification data to a mobile device; receiving, from the mobile device, item identification information associated with goods; receiving, from a scale associated with the weighing apparatus, weight data indicative of a weight of the goods on the scale; determining label data in dependence on the weight data and the item identification information; and outputting a control signal to control a printing device associated with the weighing apparatus to print a machine readable label in dependence on the determined label data.

Optionally, the method comprises communicating the apparatus identification data to the mobile device in response to the mobile device being within a predetermined distance of the weighing apparatus.

Optionally, the method comprises comprising communicating the apparatus identification data to the mobile device using a short range wireless communications protocol. The communication may be in response to the mobile device being within range of the short range wireless communications protocol.

According to the invention the apparatus identification data is indicative of an URL associated with the weighing apparatus. The URL may be represented as a machine readable graphic and communicating the apparatus identification data may comprise communicating the machine readable graphic to a display device associated with the weighing apparatus for scanning by the mobile device.

The method may comprise receiving the item identification information from an optical code reading device configured to read a machine readable graphic displayed on a display device associated with the mobile device.

According to a further aspect there is provided computer software loaded on a computer readable medium which, when executed, is arranged to perform a method as described above.

### BRIEF DESCRIPTION OF THE DRAWINGS

Embodiments of the invention are further described hereinafter with reference to the accompanying drawings, in which:
Figure 1 shows a weighing apparatus according to an embodiment of the invention;
Figure 2 is a schematic representation of a controller for the weighing apparatus according to an embodiment;
Figure 3 shows a mobile device of a user; and
Figure 4 shows a flow chart of a method according to the present invention.

### DETAILED DESCRIPTION

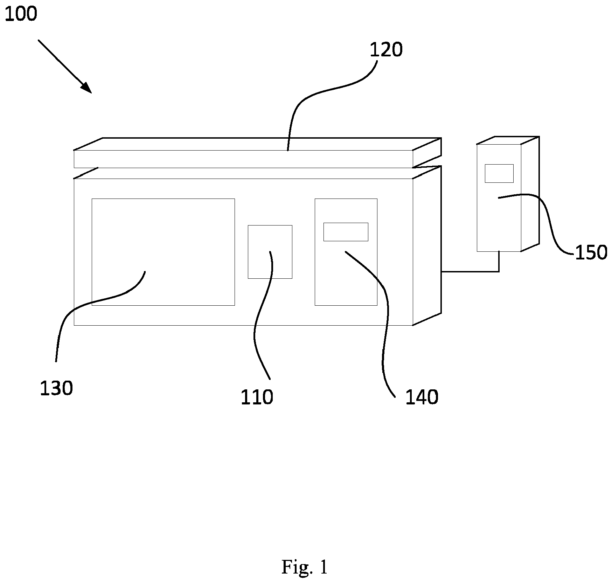

A weighing apparatus 100 according to an embodiment of the present invention is illustrated in Figure 1. The weighing apparatus 100 may in particular be suitable for use in a retail environment, for example as a supermarket scale although the present invention is not limited in the applicability of its usefulness. The weighing apparatus 100 is arranged to determine the weight of goods, and to control printing of a label for the goods to be scanned at a checkout. The weighing apparatus 100 is advantageously configured to be communicable with a mobile device of a user. The user may then utilise the mobile device to control one or more functions of the weighing apparatus so that direct user contact with the weighing apparatus is advantageously reduced.

The weighing apparatus 100 comprises a scale 120, a controller 110, a display device 130 and a printing device 140. According to some embodiments the weighing apparatus 100 may be associated with or comprise an optical code reading device 150.

The scale 120 comprises a receiving portion such as a platform or holder for placement of goods to be weighed. The scale 120 is configured to determine a weight of the goods placed on the receiving portion. The scale 120 may comprise any known force measurement technology suitable for determining weight, for example a load cell, spring or strain gauge. The scale 120 is configured to output weight data indicative of the determined weight to a controller 110 of the weighing apparatus 100 for processing.

The printing device 140 is configured to receive a control signal or printing data from the controller 110 indicative of content to be printed onto a media such as a label for the goods placed on the scales. The printing device 140 in some embodiments comprises a label printer configured to print the label for the goods. For example, the label may be printed onto a self-adhesive label for attachment to the goods or a container such as a bag of the goods. The printing device 140 is illustrated in Figure 1 as being integrated within the structure of the weighing apparatus. However, this is not a requirement of the present invention. According to some embodiments, the printing device 140 may be housed separately to the body of the weighing apparatus 100. The printing device 140 is arranged to be communicable with the controller 110. Said communication may be via a wired connection or wirelessly, such as through one or more local area networks (LANs) or a wireless communication protocol such as WIFI or Bluetooth.

The display device 130 may comprise any suitable display, for example an LED or LCD screen. The display device 130 may be integrated into the structure of the weighing apparatus 100 within a single housing, however the display device 130 may also be separate to the other components of the weighing apparatus 100. The display device 130 is communicable with the controller 110. The display device 130 may optionally comprise a touch screen or other associated input such as a keypad suitable for receiving a user input.

According to the invention the weighing apparatus 100 may comprise an optical code reading device 150 such as a barcode or QR code scanner. The optical code reading device 150 may be utilised in some embodiments to provide an indirect communication channel from the user's mobile device to the weighing apparatus 100 by reading barcodes or other machine readable code displayed on the user's mobile device, as will be explained.

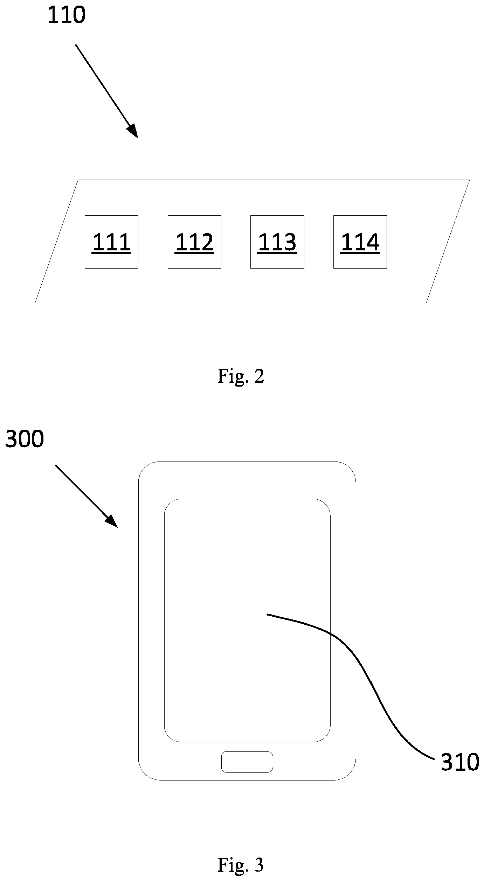

The controller 110 of the weighing apparatus is illustrated schematically in Figure 2. The controller 110 comprises at least one processor 111, a memory device 112, at least one input 113 and at least one output 114. The input 113 and output 114 together may form part of a communications module for the controller. The communications module may be arranged to send and receive signals to other connected components of the weighing apparatus 100. The input 113 and output 114 may comprise a wired electrical connection for receiving and transmitting signals. According to some embodiments, the input 113 and output 114 may comprise one or more wireless transmitters and receivers for communicating wireless signals according to a wireless communications protocol, for example Bluetooth or NFC. According to some embodiments of the present invention, the communications module may be wired or wirelessly connected to one or more public or private networks such as the Internet, or a local Intranet. The controller 110 is configured to receive, at the input, the weight data determined at the scale 120 and output to the printing device 140 a control signal.

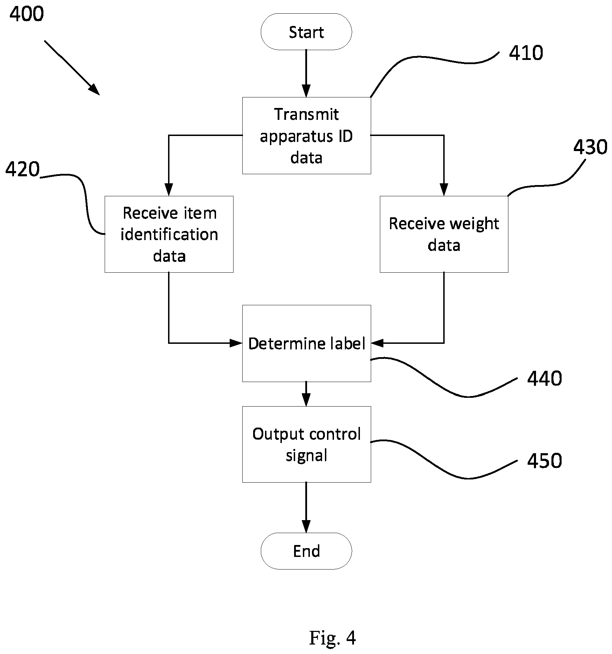

Figure 3 illustrates a mobile device 300 associated with a user of the weighing apparatus 100. The mobile device 300 is associated with a display 310 and an input device for receiving user input. Optionally, the display 310 and input device may be integrated as a touch screen 310. The input device may also comprise an audio module of the device for receiving a user's voice input. The controller 110 is configured to be communicable with the mobile device 300. In this way, the controller 110 may receive user input via the mobile device 300, reducing the need for direct user contact at the weighing apparatus. The mobile device 300 may comprise any portable electronic communications device such as a mobile phone, tablet or laptop etc. The nature of the communication between the mobile device 300 and the weighing apparatus, and thus the communication requirements placed on the mobile device 300 may vary according to different embodiments of the invention and will be described in more detail with reference to Figure 4.

A method 400 for controlling the weighing apparatus according to an embodiment of the invention is illustrated in Figure 4. Instructions for performing the method 400 may be stored on the memory 112, which cause the processor 111 to perform elements of the method 400 when executed.

The method 400 comprises a step 410 of communicating apparatus identification data to the mobile device 300. The apparatus identification data comprises means for identifying the weighing apparatus 100. The apparatus identification data may comprise means for identifying the weighing apparatus in a computer or communications network. For example, according to some embodiments the apparatus identification data may be indicative of an identifier associated with the weighing apparatus 100. In particular, the apparatus identification data may be a URL indicative of the identifier. In some embodiments, the identifier may comprise an IP address. The IP address may be an Internet IP address, or an IP address in a local public network or a private network. A private network or "Intranet" may be considered as a network designed for internal use with access restrictions, such as a secure local area network (LAN) or secured wide area network (WAN). The apparatus identification data may further comprise credentials for enabling the mobile device 300 to access the network if the network is private.

According to some embodiments, the apparatus identification data is communicated to the mobile device 300 in response to the mobile device 300 approaching or being proximal to the scale 100. The apparatus identification data may for example be communicated to the mobile device via an open short-range wireless communication protocol such as Bluetooth, NFC, ZigBee or the like.

According to the invention the apparatus identification data is communicated indirectly to the mobile device 300 via the display device 130 of the weighing apparatus 100. The apparatus identification data may be represented as a machine readable graphic such as a QR code or barcode. The controller 110 may then communicate the machine readable label to the display device 130 to be displayed. The machine readable label may then be scanned by the mobile device 300 when the user approaches the weighing apparatus. Advantageously, no contact with the weighing apparatus 100 is required to acquire the apparatus identification data.

The mobile device 300 may then use the apparatus identification data to obtain goods data indicative of a list of types of goods for which the weighing apparatus 100 is configured to weigh and provide printing data in relation to. The goods data may be stored in the memory 112 or otherwise accessible to the controller 110 of the weighing apparatus.

According to a first embodiment, the mobile device 300 may access the goods data via the URL indicated by the apparatus identification data. By navigating to the indicated URL, such as in a browser, the mobile device 300 may access an application executed in the browser enabling the user to navigate and optionally search the goods data associated with the weighing apparatus. The user may select, through the application executed in the browser of the mobile device 300, the type of goods to be weighed. The user's selection may then either be transmitted directly to the scale or the application may provide a machine readable graphic for scanning by the weighing apparatus 100, as will be explained with reference to step 420.

According to another embodiment, the mobile device 300 may have an application installed for communicating with the scale 100. The application may in some embodiments emulate the display 130 of the weighing apparatus. In this embodiment, the weighing apparatus 100 need not be connected to any wide area network (WAN) and may establish a one-to-one local connection with the mobile device 300 having the application installed. When the user approaches the scale, the mobile application may be configured to communicably couple to the controller 110 of the weighing apparatus 100 using any suitable wireless communication protocol such as Wi-Fi or Bluetooth or the like. Once communicably coupled to the weighing apparatus 100, the user may indicate or select a type of goods associated with the scale using the application executed on the mobile device.

The method 400 comprises a step 420 of receiving item identification information from the mobile device 300. The item identification information is indicative of the type of goods indicated by the user at the mobile device 300. The item identification information may be communicated directly from the mobile device 300 to the controller 110. The item identification information may be transmitted to the controller 110 via one or more public or private networks to which each of the mobile device and controller 110 are connected. Alternatively, the item identification information may be directly transmitted wirelessly to the controller 110 via any suitable alternative direct wireless communications protocol such as Bluetooth or NFC.

According to the invention the item identification information may be communicated indirectly from the mobile device 300 to the controller 110 via the display 310 of the mobile device. The browser application or local application of the mobile device 300 through which the user selects the type of goods may be configured to represent the item identification information as a machine readable graphic, such as a QR code or barcode. The machine readable graphic may then be displayed on the display 310 of the mobile device. Step 420 may then comprise scanning, by the optical code reading device 150, the machine readable graphic and decoding the machine readable graphic to obtain the item identification information. The item identification may then be communicated to the controller 110 from the optical code reading device 150.

The method 400 comprises a step 430 of receiving the weight data from the scale 120 indicative of the weight of the goods. Although illustrated in Figure 4 as concurrent to step 420, it will be appreciated that the weight data may be received from the scale subsequently or prior to receiving the item identification data.

The method 400 comprises a step 440 of determining label data in dependence on the weight data and the item identification information. That is, the controller 110 is configured to determine information to be printed on a label for the weighed goods depending on the type of goods and the weight. The label data may comprise one or more of an indication of the type of goods, the weight of the goods, a price for the goods and a machine readable graphic for scanning at a checkout. According to some embodiments, the memory 112 may store a database indicating a conversion between the type and weight of goods and a price. For example, the memory may store for each type of good a cost per weight. Step 440 may comprise utilising the item identification data and the weight data to determine a price for the goods to be printed on the label. Step 440 may comprise encoding the price of the goods as a barcode or other machine readable code indicative of the type and weight of the goods.

The method 400 comprises a step 450 of outputting a control signal or data to the printing device in dependence on the determined label data. Responsive to receiving the signal output in step 450, the printing device is configured to print a label for the goods comprising the label data determined in step 440.

Alternatively, or additionally, step 450 may comprise outputting a control signal or data to the display device 130 in dependence on the determined label data. Responsive to receiving the signal output in step 450, the display device 130 is configured to display a label for the goods comprising the label data determined in step 440, which may then be scanned by a user, for example using a self-service barcode scanner.

The present invention thus provides a method through which a user may control a weighing apparatus, such as a supermarket scale, to print a label for goods using only a mobile device 300. Advantageously, direct user contact with the weighing apparatus 100 is reduced. Furthermore, some embodiments of the present invention do not require any additional software to be installed on the mobile device and said control may be provided using only a standard web browser and display screen. Thus, embodiments of the present invention may be flexibly used with a variety of mobile devices with minimal inconvenience to the user.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A controller (110) for a weighing apparatus, comprising:
an output (114);
an input (113) configured to receive weight data from a scale (120) associated with the weighing apparatus, the weight data being indicative of a weight of goods on the scale; and
one or more processors (111) configured to:
determine label data in dependence on the weight data and the item identification information; and
output a control signal to control a printing device (140) associated with the weighing apparatus (100) to print a machine readable label in dependence on the determined label data.
**characterized in that**
the output (114) is configured to communicate apparatus identification data indicative of an URL associated with the weighing apparatus to a mobile device; and **in that** the input (113) is configured to receive item identification information associated with the goods from an optical code reading device configured to read a machine readable graphic displayed on a display device associated with the mobile device.

2. The controller (110) of claim 1, wherein the output (114) is configured to communicate the apparatus identification data to the mobile device (300) in response to the mobile device (300) being within a predetermined distance of the weighing apparatus (100).

3. The controller (110) of claim 2, wherein the output (114) is a wireless output configured to communicate the apparatus identification data to the mobile device (300) using a short range wireless communications protocol, optionally wherein the output (114) is configured to communicate the apparatus identification data to the mobile device (300) in response to the mobile device (300) being within range of the short range wireless communications protocol.

4. The controller (110) of any preceding claim, wherein the URL is represented as a machine readable graphic, and the output is configured to communicate the machine readable graphic to a display device (130) associated with the weighing apparatus (100) for scanning by the mobile device (300).

5. A weighing apparatus (100), comprising:
a scale (120) configured to determine a weight of goods placed thereon and output weight data indicative of the weight of the goods;
a display device (130) configured to display machine readable apparatus identification data associated with the weighing apparatus;
an optical code reading device (150) configured to read machine readable item identification information associated with the goods from a display associated with a mobile device (300); and
the controller (110) of any of claims 1 to 4.

6. A computer-implemented method (400) of controlling a weighing apparatus, comprising:
communicating (410) apparatus identification data indicative of an URL associated with the weighing apparatus (100) to a mobile device;
receiving (420), from an optical code reading device (150) configured to read a machine readable graphic displayed on a display device (310) associated with the mobile device, item identification information associated with goods;
receiving (430), from a scale associated with the weighing apparatus, weight data indicative of a weight of the goods on the scale;
determining (440) label data in dependence on the weight data and the item identification information; and
outputting (450) a control signal to control a printing device associated with the weighing apparatus to print a machine readable label in dependence on the determined label data.

7. The method (400) of claim 6, comprising communicating (410) the apparatus identification data to the mobile device in response to the mobile device being within a predetermined distance of the weighing apparatus.

8. The method (400) of claim 7, comprising communicating (410) the apparatus identification data to the mobile device using a short range wireless communications protocol, optionally in response to the mobile device being within range of the short range wireless communications protocol.

9. The method (400) of any of claims 6 to 8, wherein the URL is represented as a machine readable graphic, and wherein communicating (410) the apparatus identification data comprises communicating the machine readable graphic to a display device associated with the weighing apparatus for scanning by the mobile device.

10. Computer software loaded on a computer readable medium which, when executed, is arranged to perform a method (400) according to any of claims 6 to 9.

## Patentansprüche

1. Steuerung (110) für eine Wiegevorrichtung, aufweisend:
einen Ausgang (114);
einen zum Empfangen von Gewichtsdaten von einer mit der Wiegevorrichtung verbundenen Waage (120) ausgestalteten Eingang (113), wobei die Gewichtsdaten ein Gewicht von Waren auf der Waage anzeigen; und
einen oder mehrere Prozessoren (111), ausgestaltet zum:
Bestimmen von Etikettendaten in Abhängigkeit von den Gewichtsdaten und den Artikelidentifikationsinformationen;
und
Ausgeben eines Steuersignals zum Steuern einer mit der Wiegevorrichtung (100) verbundenen Druckvorrichtung (140) zum Drucken eines maschinenlesbaren Etiketts in Abhängigkeit von den ermittelten Etikettendaten;
**dadurch gekennzeichnet, dass**
der Ausgang (114) zum Übermitteln von
Vorrichtungsidentifikationsdaten, die eine mit der Wiegevorrichtung verbundene URL anzeigen, an eine mobile Vorrichtung ausgestaltet ist; und dass der Eingang (113) zum Empfangen von mit den Waren verbundenen
Artikelidentifikationsinformationen von einer optischen Codelesevorrichtung ausgestaltet ist, die zum Lesen einer maschinenlesbaren Grafik ausgestaltet ist, die auf einer mit der mobilen Vorrichtung verbundenen Anzeigevorrichtung angezeigt wird.

2. Steuerung (110) nach Anspruch 1, wobei der Ausgang (114) zum Übermitteln der Vorrichtungsidentifikationsdaten an die mobile Vorrichtung (300) in Reaktion darauf ausgestaltet ist, dass sich die mobile Vorrichtung (300) innerhalb einer vorgegebenen Entfernung von der Wiegevorrichtung (100) befindet.

3. Steuerung (110) nach Anspruch 2, wobei der Ausgang (114) ein drahtloser Ausgang ist, der zum Übermitteln der Vorrichtungsidentifikationsdaten an die mobile Vorrichtung (300) unter Verwendung eines drahtlosen Kurzstrecken-Kommunikationsprotokolls ausgestaltet ist, wobei der Ausgang (114) optional zum Übermitteln der Vorrichtungsidentifikationsdaten an die mobile Vorrichtung (300) in Reaktion darauf ausgestaltet ist, dass sich die mobile Vorrichtung (300) innerhalb der Reichweite des drahtlosen Kurzstrecken-Kommunikationsprotokolls befindet.

4. Steuerung (110) nach einem der vorhergehenden Ansprüche, wobei die URL als maschinenlesbare Grafik dargestellt wird und der Ausgang zum Übermitteln der maschinenlesbaren Grafik an eine mit der Wiegevorrichtung (100) verbundene Anzeigevorrichtung (130) zum Scannen durch die mobile Vorrichtung (300) ausgestaltet ist.

5. Wiegevorrichtung (100), aufweisend:
eine zum Bestimmen des Gewichts von darauf abgelegten Waren und zum Ausgeben von Gewichtsdaten, die das Gewicht der Waren anzeigen, ausgestaltete Waage (120);
eine zum Anzeigen maschinenlesbarer, mit der Wiegevorrichtung verbundener
Vorrichtungsidentifikationsdaten ausgestaltete Anzeigevorrichtung (130);
eine zum Lesen maschinenlesbarer, mit den Waren verbundener Artikelidentifikationsinformationen von einer mit einer mobilen Vorrichtung (300) verbundenen Anzeige ausgestaltete optische Codelesevorrichtung (150); und
die Steuerung (110) nach einem der Ansprüche 1 bis 4.

6. Computerimplementiertes Verfahren (400) zum Steuern einer Wiegevorrichtung, aufweisend:
Übermitteln (410) von Vorrichtungsidentifikationsdaten, die eine mit der Wiegevorrichtung (100) verbundene URL anzeigen, an eine mobile Vorrichtung;
Empfangen (420) von mit den Waren verbundenen Artikelidentifikationsinformationen von einer optischen Codelesevorrichtung (150), die zum Lesen einer maschinenlesbaren Grafik, die auf einer mit der mobilen Vorrichtung verbundenen Anzeigevorrichtung (310) angezeigt wird, ausgestaltet ist;
Empfangen (430) von Gewichtsdaten von einer mit der Wiegevorrichtung verbundenen Waage, wobei die Gewichtsdaten das Gewicht der Waren auf der Waage anzeigen;
Bestimmen (440) von Etikettendaten in Abhängigkeit von den Gewichtsdaten und den Artikelidentifikationsinformationen;
und
Ausgeben (450) eines Steuersignals zum Steuern einer mit der Wiegevorrichtung verbundenen Druckvorrichtung zum Drucken eines maschinenlesbaren Etiketts in Abhängigkeit von den ermittelten Etikettendaten.

7. Verfahren (400) nach Anspruch 6, aufweisend das Übermitteln (410) der Vorrichtungsidentifikationsdaten an die mobile Vorrichtung in Reaktion darauf, dass sich die mobile Vorrichtung innerhalb einer vorgegebenen Entfernung von der Wiegevorrichtung befindet.

8. Verfahren (400) nach Anspruch 7, aufweisend das Übermitteln (410) der Vorrichtungsidentifikationsdaten an die mobile Vorrichtung unter Verwendung eines drahtlosen Kurzstrecken-Kommunikationsprotokolls, optional in Reaktion darauf, dass sich die mobile Vorrichtung innerhalb der Reichweite des drahtlosen Kurzstrecken-Kommunikationsprotokolls befindet.

9. Verfahren (400) nach einem der Ansprüche 6 bis 8, wobei die URL als maschinenlesbare Grafik dargestellt wird und wobei das Übermitteln (410) der Vorrichtungsidentifikationsdaten das Übermitteln der maschinenlesbaren Grafik an eine mit der Wiegevorrichtung verbundene Anzeigevorrichtung zum Scannen durch die mobile Vorrichtung aufweist.

10. Auf ein computerlesbares Medium geladene Computersoftware, die bei Ausführung zum Durchführen eines Verfahrens (400) nach einem der Ansprüche 6 bis 9 ausgelegt ist.

## Revendications

1. Dispositif de commande (110) pour un appareil de pesage, comprenant :
une sortie (114) ;
une entrée (113) configurée pour recevoir des données de poids provenant d'une balance (120) associée à l'appareil de pesage, les données de poids étant indicatives d'un poids de marchandises sur la balance ; et
un ou plusieurs processeurs (111) configurés pour :
déterminer des données d'étiquette en fonction des données de poids et des informations d'identification d'article ; et
la sortie d'un signal de commande pour commander un dispositif d'impression (140) associé à l'appareil de pesage (100) pour imprimer une étiquette lisible par machine en fonction des données d'étiquette déterminées.
**caractérisé en ce que**
la sortie (114) est configurée pour communiquer des données d'identification d'appareil indicatives d'une URL associée à l'appareil de pesage à un dispositif mobile ; et **en ce que** l'entrée (113) est configurée pour recevoir des informations d'identification d'article associées aux marchandises provenant d'un dispositif de lecture de code optique configuré pour lire un graphique lisible par machine affiché sur un dispositif d'affichage associé au dispositif mobile.

2. Dispositif de commande (110) selon la revendication 1, dans lequel la sortie (114) est configurée pour communiquer les données d'identification d'appareil au dispositif mobile (300) en réponse au fait que le dispositif mobile (300) se trouve à une distance prédéterminée de l'appareil de pesage (100) .

3. Dispositif de commande (110) selon la revendication 2, dans lequel la sortie (114) est une sortie sans fil configurée pour communiquer les données d'identification d'appareil au dispositif mobile (300) à l'aide d'un protocole de communication sans fil à courte portée, facultativement dans lequel la sortie (114) est configurée pour communiquer les données d'identification d'appareil au dispositif mobile (300) en réponse au fait que le dispositif mobile (300) est à portée du protocole de communication sans fil à courte portée.

4. Dispositif de commande (110) selon l'une quelconque des revendications précédentes, dans lequel l'URL est représenté en tant que graphique lisible par machine, et la sortie est configurée pour communiquer le graphique lisible par machine à un dispositif d'affichage (130) associé à l'appareil de pesage (100) pour un balayage par le dispositif mobile (300) .

5. Appareil de pesage (100), comprenant :
une balance (120) configurée pour déterminer un poids de marchandises placées sur celle-ci et sortir des données de poids indicatives du poids des marchandises ;
un dispositif d'affichage (130) configuré pour afficher des données d'identification d'appareil lisibles par machine associées à l'appareil de pesage ;
un dispositif de lecture de code optique (150) configuré pour lire des informations d'identification d'article lisibles par machine associées aux marchandises à partir d'un affichage associé à un dispositif mobile (300) ; et
le dispositif de commande (110) selon l'une quelconque des revendications 1 à 4.

6. Procédé mis en œuvre par ordinateur (400) de commande d'un appareil de pesage, comprenant :
la communication (410) de données d'identification d'appareil indicatives d'une URL associée à l'appareil de pesage (100) à un dispositif mobile ;
la réception (420), à partir d'un dispositif de lecture de code optique (150) configuré pour lire un graphique lisible par machine affiché sur un dispositif d'affichage (310) associé au dispositif mobile, d'informations d'identification d'article associées à des marchandises ;
la réception (430), à partir d'une balance associée à l'appareil de pesage, de données de poids indicatives d'un poids des marchandises sur la balance ;
la détermination (440) de données d'étiquette en fonction des données de poids et des informations d'identification d'article ; et
la sortie (450) d'un signal de commande pour commander un dispositif d'impression associé à l'appareil de pesage pour imprimer une étiquette lisible par machine en fonction des données d'étiquette déterminées.

7. Procédé (400) selon la revendication 6, comprenant la communication (410) des données d'identification d'appareil au dispositif mobile en réponse au fait que le dispositif mobile se trouve à une distance prédéterminée de l'appareil de pesage.

8. Procédé (400) selon la revendication 7, comprenant la communication (410) des données d'identification d'appareil au dispositif mobile à l'aide d'un protocole de communication sans fil à courte portée, facultativement en réponse au fait que le dispositif mobile se trouve à la portée du protocole de communication sans fil à courte portée.

9. Procédé (400) selon l'une quelconque des revendications 6 à 8, dans lequel l'URL est représenté en tant que graphique lisible par machine, et dans lequel la communication (410) des données d'identification d'appareil comprend la communication du graphique lisible par machine à un dispositif d'affichage associé à l'appareil de pesage pour un balayage par le dispositif mobile.

10. Logiciel informatique chargé sur un support lisible par ordinateur qui, lorsqu'il est exécuté, est agencé pour exécuter un procédé (400) selon l'une quelconque des revendications 6 à 9.
